(19) **Europäisches Patentamt European Patent Office Office européen des brevets**

(11) **EP 4 020 844 B1**

(12) **EUROPEAN PATENT SPECIFICATION**

(45) Date of publication and mention of the grant of the patent:
**11.06.2025 Bulletin 2025/24**

(21) Application number: **20306662.6**

(22) Date of filing: **22.12.2020**

(51) International Patent Classification (IPC):
**H04B 10/2507** (2013.01)   **H04B 10/532** (2013.01)
**H04B 10/61** (2013.01)   **H04J 14/06** (2006.01)
**H04B 10/077** (2013.01)

(52) Cooperative Patent Classification (CPC):
**H04J 14/06; H04B 10/0779; H04B 10/2572;
H04B 10/532; H04B 10/614; H04B 10/6162;
H04B 10/6166**

(54) **CANCELLATION OF QUALITY OF TRANSMISSION VARIATIONS INDUCED BY POLARIZATION DEPENDENT LOSS**

UNTERDRÜCKUNG VON DURCH POLARISATIONSABHÄNGIGE VERLUSTE INDUZIERTE ÜBERTRAGUNGSQUALITÄTSSCHWANKUNGEN

ANNULATION DES VARIATIONS DE LA QUALITÉ DE TRANSMISSION INDUITES PAR LES PERTES DÉPENDANTES DE LA POLARISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.06.2022 Bulletin 2022/26**

(73) Proprietor: **Nokia Solutions and Networks Oy 02610 Espoo (FI)**

(72) Inventors:
• **DELEZOIDE, Camille 78950 GAMBAIS (FR)**
• **RAMANTANIS, Petros 92160 ANTONY (FR)**

(74) Representative: **Novagraaf Technologies Bâtiment O2 2, rue Sarah Bernhardt CS90017 92665 Asnières-sur-Seine Cedex (FR)**

(56) References cited:
EP-A1- 2 924 890      EP-B1- 2 924 890
US-A1- 2014 341 587      US-B2- 9 112 609

**Description**

TECHNICAL FIELD

Various example embodiments relate generally to methods and apparatuses for reducing the impact of polarization dependent losses on the quality of transmission (QoT).

EP 2 924 890 A1 and US 2014/341587 A1 disclose methods and devices for reducing the effects of polarization dependent losses.

BACKGROUND

Discrete optical elements often exhibit a non-unitary effect causing gain or loss imbalance between the two polarization tributaries of the polarization-multiplexed optical signals. This non-unitary effect, called Polarization Dependent Loss (PDL), impairs the quality of transmission in current and next-generation optical systems.

Polarization dependent loss (PDL) may occur in all network elements (NE) crossed by optical transmissions. PDL causes a dependence between the state of polarization (SOP) and the quality of transmission (QoT). Since the SOP may fluctuate, this phenomenon leads to QoT fluctuations. In "normal" lightpaths, the PDL is small and causes QoT fluctuations in the magnitude of 0.1dB, which typically does not represent a severe impairment. However, due to some field deteriorations, the PDL of a lightpath can become abnormally large, leading to very large QoT fluctuations, with several dB of amplitude. Such large QoT fluctuations can remain undetected because, due to margins they do not necessarily lead to outages at the time of the deterioration. The term 'margins' refers here to the excess performance for an installed system (e.g. in terms of generalized signal to noise ratio, GSNR), with respect to the required performance for error free operation, i.e. the forward error correction (FEC) threshold $GSN\ R_{FEC}$.

The large fluctuations of the QoT induced by abnormal PDL causes several technical problems.

The higher the QoT, the lower the probability that any unrelated deterioration, temporary or permanent, will lead to an outage. The major QoT variations induced by abnormal PDL increase the outage probability, which is a major concern for network operators. Due to the erosion of margins (e.g. a decrease of the average $GSNR\text{-}GSN\ R_{FEC}$) over time, the problem is made worse with time, leading to increasingly frequent outages.

In the context of elastic optical networks, the rate of the transponder may be tuned based on the observation of the QoT. High PDL-induced variations significantly reduce the potential for rate upgrade.

In some software network management tools alarms may be generated when the QoT falls below a predefined threshold. In case of large PDL-induced QoT variations, alarms may be frequently raised, then released, leading to confusion. More importantly, large and permanent QoT variations make the early detection of events typically leading to major outages very difficult, simply because their signatures are hidden in the QoT variations.

SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

The invention is defined by the appended claims.

At least one example embodiment provides a method comprising: detecting polarization dependent loss, PDL, induced quality of transmission, QoT, variations, wherein detecting PDL induced QoT variations includes at least one of detecting a difference between QoT measures obtained for two polarization tributaries of electrical field and detecting a temporal correlation between QoT variations and state of polarization, SOP, variations; and performing a SOP adjustment using an iterative process, wherein an iteration includes determining transmitter SOP settings based on QoT measures at receiver side, sending the transmitter SOP settings to an optical transmitter and updating the QoT measures at receiver side.

According to one or more examples, determining transmitter SOP settings ($SOP_{Tx}$) includes determining initial transmitter SOP settings and determining current transmitter SOP settings from previous transmitter SOP settings and a gradient of a convergence control parameter based on one or more QoT measures. The convergence control parameter may be determined as a difference between current QoT measures obtained for the two polarization tributaries of the electrical field. The convergence control parameter may be determined as a difference between a reference QoT measure and a current overall QoT measure.

According to one or more examples, the method may further include: performing a training phase to determine SOP settings producing an optimum QoT. SOP settings ($SOP_{Tx}$) producing the optimum QoT may be used as the initial transmitter SOP settings for the iterative process.

At least one other example embodiment provides an apparatus comprising at least one processor and at least one memory including computer program code. The at least one memory and the computer program code are configured to, with the at least one processor, cause the apparatus to: detect polarization dependent loss, PDL, induced quality of transmission, QoT, variations, wherein detecting PDL induced QoT variations includes at least one of detecting a difference between QoT measures obtained for two polarization tributaries of electrical field and detecting a temporal correlation between QoT variations and state of polarization, SOP, variations; and perform a SOP adjustment using an iterative process, wherein an iteration includes determining transmitter SOP settings ($SOP_{Tx}$) based on QoT measures at receiver side, sending the transmitter SOP settings to an optical transmitter and updating the QoT measures at receiver side.

Generally, the at least one memory and the computer program code are configured to, with the at least one processor, cause the apparatus to perform one or more or all steps of a method according to the first aspect as disclosed herein.

One or more example embodiments provide an apparatus comprising means for detecting polarization dependent loss, PDL, induced quality of transmission, QoT, variations, wherein detecting PDL induced QoT variations includes at least one of detecting a difference between QoT measures obtained for two polarization tributaries of electrical field and detecting a temporal correlation between QoT variations and state of polarization, SOP, variations; and means for performing a SOP adjustment using an iterative process, wherein an iteration includes determining transmitter SOP settings based on QoT measures, sending the transmitter SOP settings to an optical transmitter and updating the QoT measures.

One or more example embodiments provide an apparatus comprising a SOP control circuitry configured to: detect polarization dependent loss, PDL, induced quality of transmission, QoT, variations, wherein detecting PDL induced QoT variations includes at least one of detecting a difference between QoT measures obtained for two polarization tributaries of electrical field and detecting a temporal correlation between QoT variations and state of polarization, SOP, variations; and perform a SOP adjustment using an iterative process, wherein an iteration of the iterative process includes determining transmitter SOP settings based on QoT measures, sending the transmitter SOP settings to an optical transmitter and updating the QoT measures. The apparatus may further include a calculation circuitry configured to determine the QoT measures for the two polarization tributaries of electrical field and / or the QoT variations and state of polarization, SOP, variations over a measurement period.

Generally, the apparatus comprises means for performing one or more or all steps of a method as disclosed herein. The means may include circuitry configured to perform one or more or all steps of a method as disclosed herein. The means may include at least one processor and at least one memory including computer program code, wherein the at least one memory and the computer program code are configured to, with the at least one processor, cause the apparatus to perform one or more or all steps of a method as disclosed herein.

At least one example embodiment provides a non-transitory computer-readable medium storing computer-executable instructions for causing an apparatus to perform: detecting polarization dependent loss, PDL, induced quality of transmission, QoT, variations, wherein detecting PDL induced QoT variations includes at least one of detecting a difference between QoT measures obtained for two polarization tributaries of electrical field and detecting a temporal correlation between QoT variations and state of polarization, SOP, variations; and performing a SOP adjustment using an iterative process, wherein an iteration includes determining transmitter SOP settings based on QoT measures at receiver side, sending the transmitter SOP settings to an optical transmitter and updating the QoT measures at receiver side.

Generally, the computer-executable instructions cause an apparatus to perform one or more or all steps of a method as disclosed herein.

BRIEF DESCRIPTION OF THE DRAWINGS

Example embodiments will become more fully understood from the detailed description given herein below and the accompanying drawings, which are given by way of illustration only and thus are not limiting of this disclosure.

FIGS. 1A and 1B illustrates PDL-induced QoT variations.
FIGS. 2 illustrates the physical effects causing PDL.
FIG. 3A shows a block diagram of a coherent receiver according to an example.
FIG. 3B shows a block diagram of an optical transmitter according to an example.
FIG. 3C shows a block diagram of an optical transmitter according to an example.
FIGS. 4A-4D shows block diagrams of various systems for PDL-induced QoT variations management.
FIG. 5 is a flow chart illustrating a method for PDL-induced QoT variations management according to an example.
FIG. 6A is a flow chart illustrating a method for PDL-induced QoT variations detection according to an example.
FIG. 6B is a flow chart illustrating a method for PDL-induced QoT variations detection according to an example.
FIG. 6C is a flow chart illustrating a method for SOP tracking according to an example.
FIG. 6D is a flow chart illustrating a method for handling alarms according to an example.

FIG. 7A is a flow chart illustrating a method for SOP adjustment according to an example.

FIG. 7B is a flow chart illustrating a method for SOP adjustment according to an example.

FIG. 8 shows aspects of SOP and QoT measurements.

FIG. 9 shows a block diagram of a coherent receiver according to an example.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

<u>DETAILED DESCRIPTION</u>

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

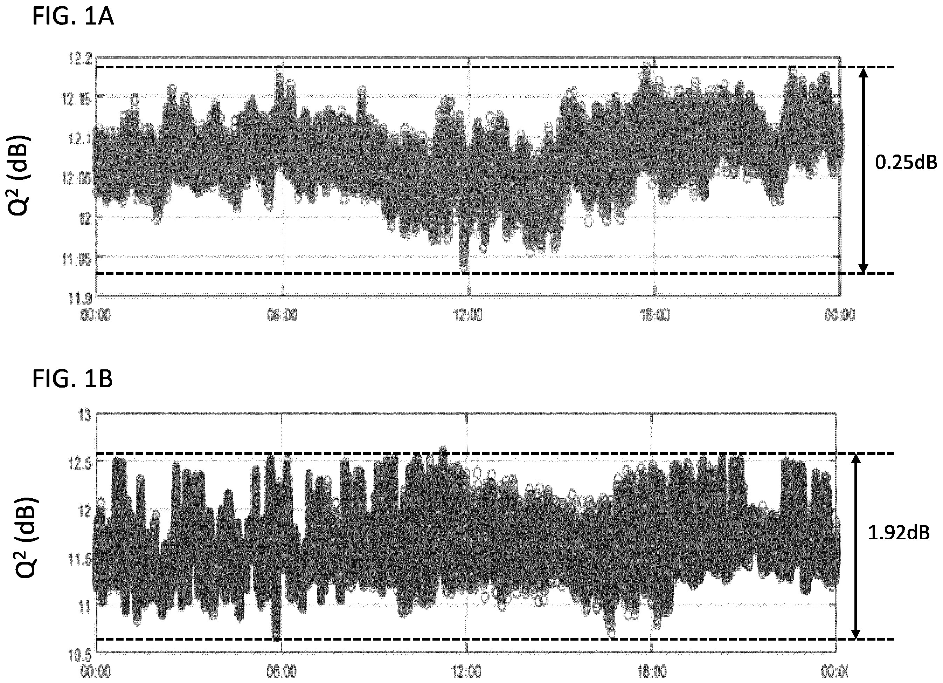

FIGS. 1A and 1B show example of normal and abnormal QoT variations measured for a light path. In FIG. 1A the variations of QoT are such that the difference between the maximum and the minimum value amounts to about 0.25 dB: this situation corresponds to a low PDL. In FIG. 1B the variations of QoT are such that the difference between the maximum and the minimum value amount to about 1.92 dB: this situation corresponds to a high PDL. The threshold between low and high PDL may be adjusted as appropriate, for example the threshold may be equal to 1 dB, or 0.5 dB, e.g. depending on quality requirements and / or the target system, etc.

A QoT measure may be a generalized signal to noise ratio (GSNR) or some other equivalent metric. The GSNR can be assessed by a pre-FEC BER (Bit Error Ratio) (direct or indirect) measurement, a measurement extracted from the constellation samples before FEC, or using a combination of these measurements. Other performance metrics may be used to assess the QoT before forward error correction (FEC): $Q^2_{BER}$, EVM (Error Vector Magnitude), ESNR (electrical signal to noise ratio), OSNR etc. These metrics generally derive from three measurement processes. The OSNR is measured before the optical receiver with an optical spectrum analyzer. The pre-FEC BER is measured in the coherent receiver via the FEC decoder. The ESNR is measured in the coherent receiver via constellation diagram analysis before FEC.

Concerning $Q^2_{BER}$, in the context of coherent optical communications, the quantity $Q^2_{BER} = \left[ \sqrt{2} \cdot erfc^{-1}(2 \cdot BER) \right]^2$ may be used as a substitute for BER, since there is a 1-1 relationship between the two. For instance, when the modulation format is QPSK and if the noise is with good approximation additive white and Gaussian, $SNR = Q^2_{BER}$. Any QoT metric e.g. $Q^2_{BER}$, GSNR, BER, mutual information, generalized mutual information etc may be used.

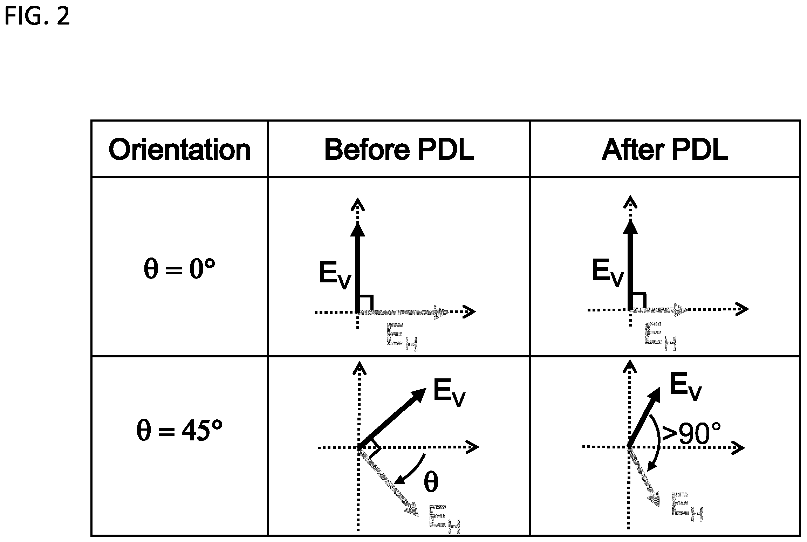

FIG. 2 shows some aspects of the physical effects behind PDL-induced QoT variations. An optical device that causes PDL is referred to herein as a PDL element. Depending on the relative orientation angle θ between the polarization tributaries $E_H$ (referred to as the horizontal tributary, and represented by a gray arrow in the figure) and $E_V$ (referred to as the horizontal vertical tributary, and represented by a black arrow in the figure) with respect to the PDL axis, a PDL element may cause a power or optical signal-to-noise ratio (OSNR) difference of the two polarization tributaries, as illustrated by the first line (relative orientation angle θ=0°) of the table of FIG. 2, and/or non-orthogonality of the (originally orthogonal) polarization tributaries, as illustrated by the second line (relative orientation angle θ=45°) of the table of FIG. 2. The PDL axis is one of the axis x and y for which the corresponding polarization component is attenuated the most. E.g. if the x polarization is attenuated while the y polarization is not attenuated, the x axis is the PDL axis.

A polarization-division-multiplexed (PDM) signal having initially two orthogonal tributaries $E_V$ and $E_H$ that is sent through a system with multiple randomly oriented PDL elements may incur both impairments. As illustrated by FIG. 2, depending on the orientation angle θ between the horizontal tributary and the PDL axis, the PDL element creates an imbalance between the QoT of each tributary.

Experimental results also show that when the orientation angle θ varies, a periodic QoT variation is observed in presence of PDL network elements and that the $QoT_H$ (measured e.g. as OSNR) for the horizontal polarization tributary $E_H$ increases when the $QoT_V$ measured for the vertical polarization tributary $E_H$ decreases. For example, in the experimental system, the worst case may be observed with the orientation angle θ=0° with $QoT_H < QoT_V$ and the best case may be observed with the orientation angle θ=45° with $QoT_H = QoT_V$.

In one or more embodiments, the optical receiver is configured to measure the QoT at receiver side, to detect PDL-induced QoT variations for a given optical path (i.e. lightpath) between the associated optical transmitter and optical receiver at both ends of the optical path. The optical path or lightpath between a receiver and an associated transmitter may be established through one or more optical link(s) / fiber(s) and one or more optical devices (including PDL elements).

Two approaches may be used for detecting the PDL-induced QoT variations.

According to a first detection approach, the QoT is determined at the optical receiver separately for both polarization tributaries as $QoT_H$ and $QoT_V$ and PDL-induced QoT variations are detected when the QoT values $QoT_H$ and $QoT_V$ from both tributaries significantly differ, for example when the difference between $QoT_H$ and $QoT_V$ is greater than a threshold. The SOP settings are derived from the values of $QoT_H$ and $QoT_V$

According to a second detection approach, the temporal variations of SOP and an overall QoT (without distinction between $QoT_H$ and $QoT_V$) are monitored at the optical receiver. The overall QoT may be determined based on a constellation map. Here, PDL-induced QoT variations are detected when the temporal variations of the QoT and SOP are significantly correlated, e.g. when a correlation factor is above a threshold. The SOP settings may be derived from the overall QoT measurement.

When PDL-induced QoT variations are detected or only when PDL-induced QoT variations are over a threshold, the optical receiver may be configured to determine and send SOP settings to the optical transmitter to enable a real time adjustment of the SOP at the output of the optical transmitter and automatically cancel, or at least reduce, the PDL-induced QoT variations during a tracking phase (also referred to here as the SOP adjustment phase). The adjustment loop may be performed in closed loop between the associated optical receiver and optical transmitter: the optical transmitter applies SOP settings determined by the optical receiver whereas the optical receiver measures the PDL-induced QoT variations resulting from the SOP settings applied by the optical transmitter. The adjustment loop may be repeated until cancellation of PDL-induced QoT variations or until at least the PDL-induced QoT variations are below a threshold.

When the first detection approach is used the SOP adjustment may be performed such that the $QoT_H$ and $QoT_V$ values from both tributaries are equal, which corresponds to the maximal overall QoT achievable through SOP adjustment. When the second detection approach is used the SOP adjustment may be performed such that the overall QoT is maximized, e.g. using convex optimization.

Full information on a completely polarized state may be provided by the amplitude and phase of oscillations of the two components x and y (also referred to as the vertical and horizontal components) of the electric field $\vec{E}$ in the plane of polarization which is orthogonal to the propagation direction. The amplitude and phase information can be conveniently represented as a two-dimensional complex vector (also referred to as the Jones vector) $\vec{E} = \begin{bmatrix} E_H \\ E_V \end{bmatrix} = \begin{bmatrix} \alpha_H e^{i\theta_H} \\ \alpha_V e^{i\theta_V} \end{bmatrix}$. The

electric field $\vec{E}$ is also noted $\vec{E} = \begin{bmatrix} E_x \\ E_y \end{bmatrix}$.

The transmitter SOP settings for the optical transmitter is noted by a vector $SOP_{Tx}$, while the SOP measured at the optical receiver at timestamp t is noted by the vector $SOP_{Rx}(t)$ or simply $SOP_{Rx}$. Let $M_{path}(t)$ be the matrix representing the PDL effect at timestamp t of the optical path, then one can write

$$SOP_{Rx}(t) = M_{path}(t) \, SOP_{Tx}.$$

In the Stokes representation space, the vector $SOP_{Rx}$ is defined by three components $s_{1,Rx}$, $S_{2,Rx}$, $S_{3,Rx}$ while in the Jones representation space, the vector $SOP_{Rx}$ is noted $(\alpha_{Rx}, \delta_{Rx})$:

$$\mathbf{SOP_{Rx}} = (s_{1,Rx}, s_{2,Rx}, s_{3,Rx}) \Leftrightarrow \mathbf{SOP_{Rx}} = (\alpha_{Rx}, \delta_{Rx})$$

Likewise,

$$\mathbf{SOP_{Tx}} = (s_{1,Tx}, s_{2,Tx}, s_{3,Tx}) \Leftrightarrow \mathbf{SOP_{Tx}} = (\alpha_{Tx}, \delta_{Tx})$$

The SOP at the output of the optical transmitter may be adjusted by the optical transmitter based on the SOP settings $\mathbf{SOP_{Tx}}$, either in the digital domain or in the optical domain: the SOP correction is applied to the digital signal before digital-to-analog conversion, or through polarization control of the output optical signal. The adjustment may for example be performed by a polarization controller integrated within or at the output of the transponder of the transmitting circuitry Tx of the optical transmitter.

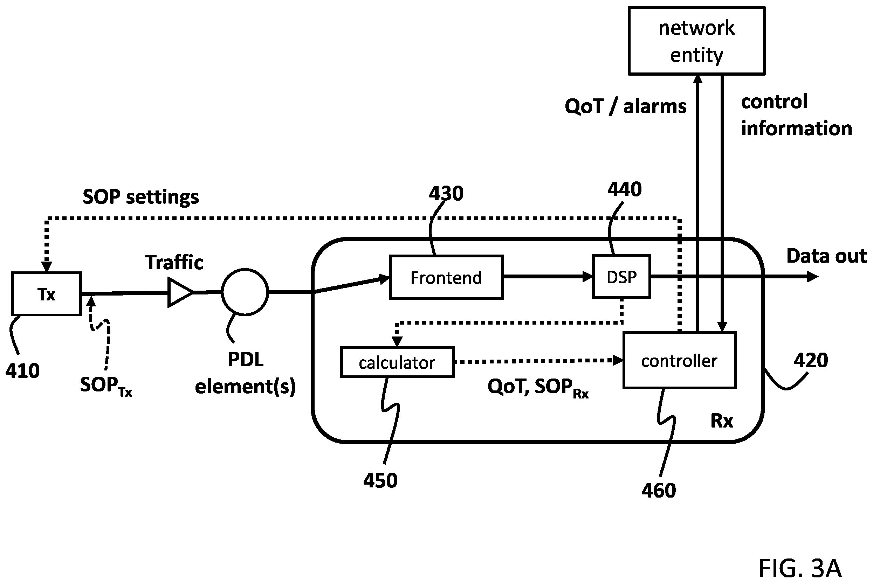

FIG. 3A shows an example embodiment of an optical receiver 420. The optical receiver 420 is configured to communicate with an optical transmitter 410 through an optical path (also referred as the lightpath), established through one or more optical links / fibers and one or more optical devices (including PDL elements). The optical receiver 420 may for example include a front end circuitry 430 for coherent detection of an optical signal and conversion to a digital signal. The optical receiver may include a DSP (digital signal processing) circuitry 440 for decoding OTN (Optical Transport Network) frame(s) carried by the digital signal and generation of output OTN data. In various embodiments, the modulation scheme used for encoding and transmitting the OTN data is DQPSK or QPSK, Quadrature Phase Shift Keying, or one of 16QAM (quadrature amplitude modulation), 8QAM, 64QAM, probabilistic constellation shaping (PCS) based e.g. using 16QAM as base constellation etc.

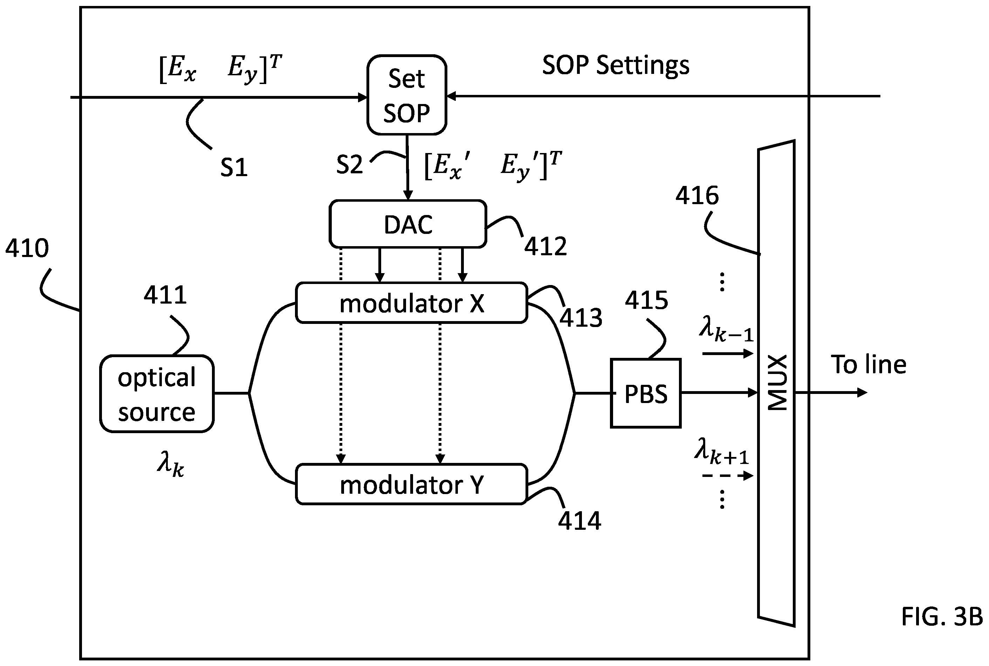

FIG. 3B shows an example embodiment of an optical transmitter 410 in which the SOP correction is applied in digital domain before digital-to-analog conversion through the DAC 412. The SOP of the input modulated electrical signal S1 carrying input data is corrected digitally based on the SOP settings to generate a second electrical signal S2 which is fed to the DAC. The analog signal at the output of the DAC 412 is used to control a first optical modulator 413 (modulator X) and a second optical modulator 414 (modulator Y). The optical modulator 413 is configured to modulate the source signal produced by the optical source 411 based on the horizontal component of the second signal S2, while the second optical modulator 414 is configured to modulate the source signal based on the vertical component of the second signal S2. The two modulated signals are processed by a PBS 415 (Polarization Beam Splitter) whose outputs are multiplexed by a multiplexer 416 and sent through the optical link.

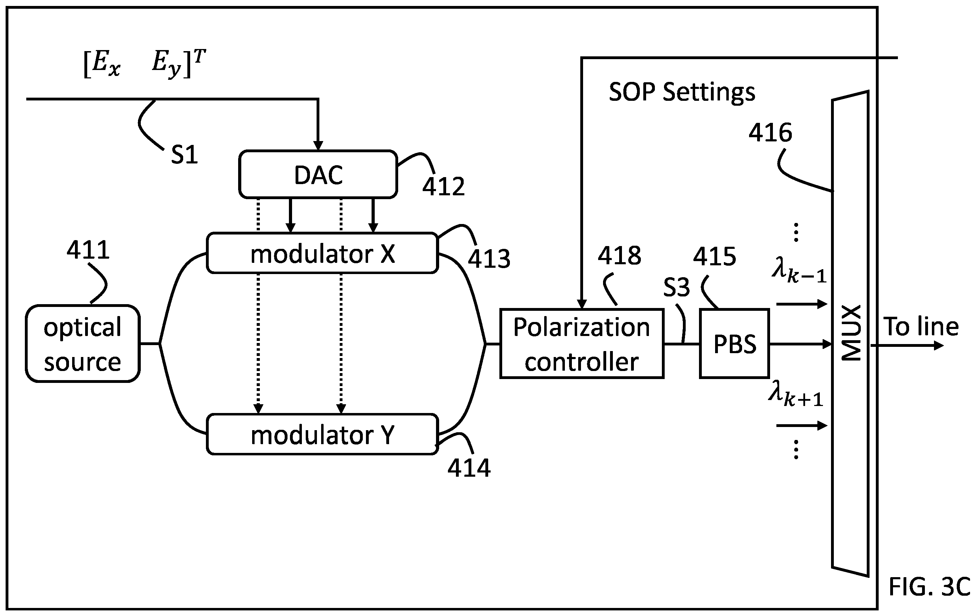

FIG. 3C shows an example embodiment of an optical transmitter 410 in which the SOP correction is applied in optical domain by a ppolarization controller 418. The SOP of the input modulated electrical signal S1 carrying input data is fed to the DAC 412. Like for FIG. 3A, the analog signal at the output of the DAC 412 is used to control a first optical modulator 413 (modulator X) and a second optical modulator 414 (modulator Y). first The optical modulator 413 is configured to modulate the source signal produced by the optical source 411 based on the horizontal component of the second signal S2, while the second optical modulator 414 is configured to modulate the source signal based on the vertical component of the second signal S2. The SOP of the two modulated signals is corrected based on the SOP settings by the ppolarization controller 418 whose output is the optical signal with the target SOP and is fed to the PBS 415 (Polarization Beam Splitter).

In one or more embodiments, the optical receiver is configured to determine QoT values ($QoT_H$ and $QoT_V$ or an overall QoT value according to the detection approach) for an optical path and SOP settings for an associated optical transmitter according to any embodiment disclosed herein. In the example of FIG. 3A, the optical receiver 420 includes a calculator 450 (e.g. calculation circuitry 450) configured to determine QoT values and / or SOP settings according to any embodiment disclosed herein.

The SOP settings $\mathbf{SOP_{Tx}}$ may include a corrected Jones vector $[\sqrt{\alpha}e^{j\delta} \cdot E_H, \sqrt{1-\alpha} \cdot E_V]$ to be used by the optical transmitter or include two coefficients $\alpha$ and $\delta$ defining a corrected Jones vector as $[\sqrt{\alpha}e^{j\delta} \cdot E_H, \sqrt{1-\alpha} \cdot E_V]$.

In one or more embodiments, the optical receiver may be configured to determine and send control information to an optical transmitter and / or to a network entity. The control information may include SOP settings and / or QoT information and / or alarm message(s). In the example of FIG. 3A, the optical receiver 420 includes a SOP controller 460 (e.g. SOP control circuitry 460) configured to determine and send control information based on QoT values and / or SOP settings received from the calculator 450.

In one or more embodiments, the SOP settings $\mathbf{SOP_{Tx}}$ generated by an optical receiver may be sent by the optical receiver directly to an associated optical transmitter or to such transmitter through a network entity. For example, the SOP settings received by a network entity from an optical receiver may be sent by the network entity to one or more optical transmitters.

In one or more embodiments, the QoT information may include one or more QoT values or other one or more parameters derived from one or more QoT values.

An alarm message(s) may be included in the control information when PDL-induced QoT variations are detected and / or only when abnormal PDL-induced QoT variations are detected (e.g. variations over a threshold) and / or when an optical fiber needs to be replaced, etc. An alarm may be generated when the amplitude of the PDL-induced QoT variation is above a pre-defined threshold and forwarded to the control layer. An alarm message may be generated based on a comparison of amplitude and period of detected QoT variations to pre-defined alarm thresholds. An alarm message may include information on a PDL-induced QoT issue detected by an optical receiver and may be used as a basis to trigger an adjustment of the SOP at the output of the concerned optical transmitter, either as a temporary or permanent solution to the detected PDL-induced QoT issue.

In the control layer, the various alarm messages may be correlated at the scale of the network to determine which optical path(s) have abnormal PDL and trigger SOP correction for these optical path(s). These various alarm messages may also be forwarded to an operator, which can decide to send a technical team on the field to replace the impaired optical fiber(s) / PDL element(s).

Control information may also be determined and sent by a network entity to an optical receiver: the control information (here downlink control information) may include at least one request for an optical receiver. The downlink control information may include for example a request to activate / deactivate the detection of PDL-induced QoT variations and / or to activate / deactivate SOP adjustment. The downlink control information may include settings for the detection of PDL-induced QoT variations, e.g. a threshold for detection of PDL-induced QoT variations or a threshold for SOP settings determination, etc.

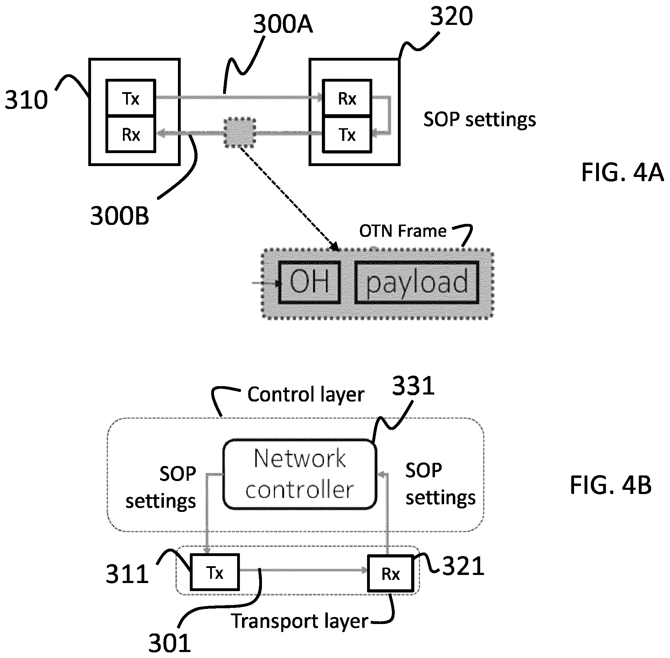

FIGS. 4A-4D show various embodiments for sending control information from an optical receiver to an optical transmitter or to a network entity or vice versa. A network entity may be a network controller, a monitoring device, a management device, etc.

In the embodiment of FIG. 4A, the optical transmitter 310 is connected with the optical receiver 320 through a first optical fiber 300A and a second optical fiber 300B, implementing a bidirectional optical path. Each of the optical transmitter 310 and optical receiver 320 includes a transmitter unit Tx and receiver unit Rx. The optical receiver 320 is configured to determine SOP settings based on optical signals received from the optical transmitter 310 through the first optical fiber 300A and the optical receiver 320 is configured to send SOP settings to the optical transmitter 310 through the second optical fiber 300B. The SOP settings may here be included in an OTN frame including a header OH and a payload.

In the embodiment of FIG. 4B, the optical transmitter 311 is connected with the optical receiver 321 through only one optical fiber 300A. The optical receiver 321 is configured to send SOP settings using a control layer, e.g. through a network controller 331. For example the optical receiver 321 is configured to send SOP settings through a control link existing between the network controller 331 and the optical receiver 321 and the network controller is configured to forward the SOP settings to the optical transmitter 311 through a control link existing between the network controller 331 and the optical transmitter 311.

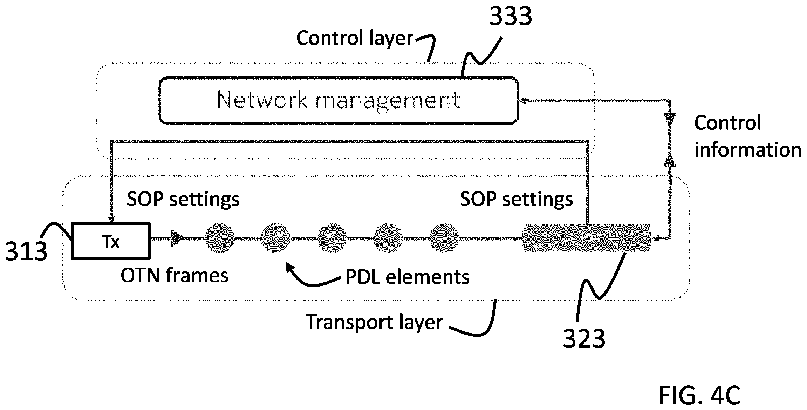

In the embodiment of FIG. 4C, the optical transmitter 313 is connected with the optical receiver 323 through one or more optical fibers and one or more PDL elements. Like for FIG. 4B, the optical receiver 323 is configured to send SOP settings using a control layer, e.g. through a network controller 333. Further, the control link existing between the network controller 333 and the optical receiver 323 may be used to send control information.

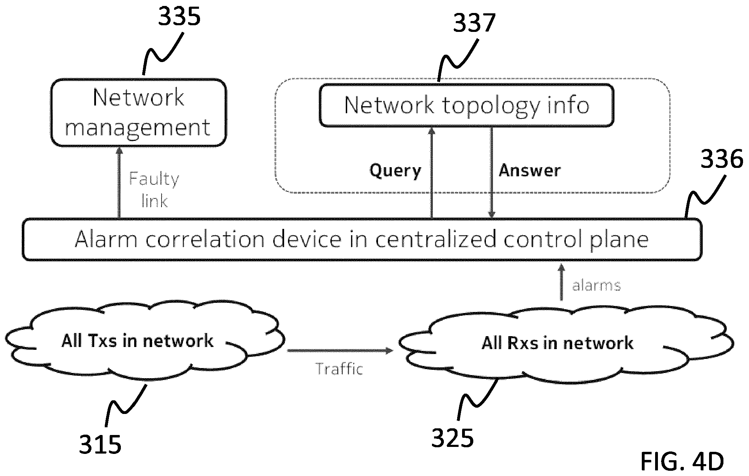

In the embodiment of FIG. 4D, a plurality of optical transmitters 315 are connected through several optical paths with a plurality of optical receivers 325, and each receiver may be configured to send control information using a control layer to a network controller 335. The network controller 335 may be configured to take a centralized decision based on the control information from several optical receivers 325 and, optionally, taking into account the network topology implemented by the plurality of transmitters 315 and the plurality of receivers 325. For the detection at the path level, PDL alarms at the path level may be correlated network-wide to at least reduce the list of paths where the PDL anomaly is detected. The decision may involve an analysis of correlation between the control information received from the optical receivers 325. The decision may include the identification of one or more transmitters of the plurality of optical transmitters 315 to which new SOP settings are to be transmitted. The decision may include the identification of one or more receivers of the plurality of optical receivers 325 to which control information is to be transmitted. The decision may include determining whether to trigger an alarm for replacement of an optical fiber and / or identification of impaired fibers to be replaced.

In one or more embodiments, an automated cancellation or at least reduction of PDL-induced QoT variations is implemented in close control loop between an optical transmitter and an associated optical receiver. The automated cancellation of PDL-induced QoT variations is decomposed into two phases: training and tracking.

During the training phase, the SOP is scanned by the optical transmitter to allow the corresponding optical receiver to determine at least one SOP value for which the overall QoT is optimum or at least above / below a threshold. Since a QoT value may be measured using various parameters, the optimum QoT value may correspond to a minimum or maximum value of the selected parameter. For example optimizing QoT means minimizing the BER. The scanning may be performed over the complete range of SOP values (e.g. by scanning the Poincaré sphere in Stokes space) or over a sub-range around current SOP settings. A discrete set of SOP values may be used for the range or sub-range based on a given sampling step.

This optimum QoT value $QoT_M$ and the corresponding SOP settings $SOP_{Tx} = SOP_0$ become the starting point (initial SOP settings) of the tracking phase. At the end t1 of the training phase, $QoT_H(t1) = QoT_V(t1)$ and $QoT(t1) = QoT_M$ is achieved with $SOP_{Tx}(t1) = SOP_0$ and $SOP_{Rx}(t1) = SOP_{REF}$ such that at the end t1 of the training phase, the $SOP_{REF} = M_{path}(t1) * SOP_0$.

After some time t2 after t1, the SOP $SOP_{Rx}$ determined at receiver side may vary due to PDL in the optical path such that

$$SOP_{Rx}(t2) = M_{path}(t2) * SOP_0$$

During the tracking phase, the SOP at the output of the optical transmitter is corrected in real time to maintain the QoT in the vicinity of the optimum value obtained during the training phase through automation. The correction may be continuous, periodical or triggered by a specific event, e.g. a QoT variation over a predefined threshold.

A SOP correction may be needed when modification of $M_{path}$ induces that at least one, at least two or all the below conditions are verified:

1. $QoT < QoT_{REF}$
2. $QoT_H$ differs from $QoT_V$
3. $SOP_{Rx}$ differs from $SOP_{REF}$

For example conditions 1 and 2 may be used to detect a SOP correction is needed for the detected PDL-induced QoT variations. Alternatively the conditions 1 and 2 may be used to detect a SOP correction is needed for the detected PDL-induced QoT variations.

During the tracking phase, the correction is computed based on the current SOP settings $SOP_{Tx} = SOP_0 + w$ where w is a linear SOP correction determined for example by an optimization method, e.g. a gradient descent method.

According to a first tracking approach, the SOP settings $SOP_{Tx}$ are updated based on the comparison between $QoT_H$ and $QoT_V$.. This first tracking approach is preferably used in combination with the first detection approach using the same $QoT_H$ and $QoT_V$ values.

According to a second tracking approach, the SOP settings $SOP_{Tx}$ are updated based on the comparison between QoT and $QoT_{REF}$. In the second tracking approach, $SOP_{Rx}$ is correlated with QoT to make sure that the QoT variations triggering the correction is due to a variation of the matrix $M_{path}$, and not an unrelated issue. This second tracking approach is thus preferably used in combination with the second detection approach based on the detection of correlation between the QoT variations and $SOP_{Rx}$ variations.

Concerning the training phase, an initial training phase may be launched when the control loop is active. This can be either by default when the light path through the optical link(s) is established, or manually (through the transponder interface) or remotely (through network management software) after an issue of PDL-induced QoT variation is diagnosed.

The training phase may be repeated in various ways. The training phase may be repeated based on a predefined schedule, for example each day, each month or on any periodical basis. The training phase may be triggered for example at night during which the impact of induced QoT variations is minimal. The training phase may also be triggered based on predefined trigger conditions, e.g. trigger conditions based on QoT variations or when the QoT does not adequately respond to the SOP correction applied during the tracking phase. To define trigger conditions, the detected PDL-induced QoT variations may be classified according to the amplitude of QoT variations, e.g. "normal" QoT (e.g. variations below 0.3dB), between two predefined values, etc.

The training phase may also be triggered manually by an operator. The training phase may also be triggered automatically by the optical receiver and / or by a remote device, e.g. a network entity or monitoring device.

In one or more embodiments, the optical receiver is configured to implement a passive mode in which PDL-induced QoT variations are detected, but these variations do not trigger SOP adjustments in close loop: in the passive mode the optical receiver and optical transmitter are in open loop. In the passive mode, control information (SOP settings, QoT values, alarm message(s), etc) may be generated and sent to a network entity for further processing and / or a decision whether or not to trigger SOP adjustment. An alarm may be determined only generated when in passive mode.

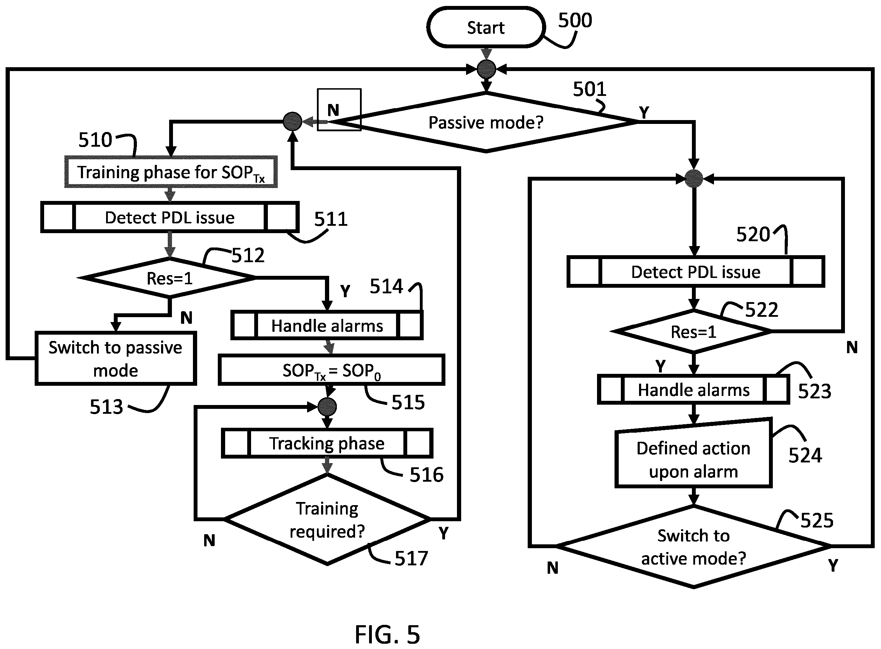

FIG. 5 shows a flowchart of a method for PDL induced QoT management. The steps of the method may be implemented by an optical receiver according to any example described herein. This method for PDL induced QoT management shows an example of how the training phase, the detection of PDL induced QoT variations and handling of alarms may be combined. While the steps are described in a sequential manner, the man skilled in the art will appreciate that some steps may be omitted, combined, performed in different order and / or in parallel or based on a different logic.

At step 500, the method starts.

At step 501, it is determined whether to enter into a passive mode. When it is determined that passive mode is to be entered, step 520 is executed after step 501. Otherwise it is determined that active mode is to be entered and step 510 is executed after step 501.

At step 510, a training phase is implemented to determine SOP settings $SOP_{Tx}$ for an optical transmitter (transmitter SOP settings $SOP_{Tx}$). The training phase may be implemented according to any embodiment described herein. The training phase is implemented in closed loop with the optical transmitter to determine which SOP settings $SOP_{Tx}$ provide(s) the optimum **overall** $QoT_M$ measurement at the optical receiver. Since a QoT value may be measured using various parameters, the optimum **overall** $QoT_M$ measurement value may correspond to a minimum or maximum value of the selected parameter.

At step 511, a detection of PDL induced QoT variations is performed.

At step 512, if PDL induced QoT variations have been detected at step 511 (result=1), then step 514 is executed after step 512. Otherwise, if no PDL induced QoT variations have been detected at step 511, then step 513 is executed after step 512.

At step 513, it is determined that a switch to passive mode is required and step 501 is executed again after step 513. The determination may be based on any rule, policy or configuration.

At step 514, a handling of alarms is performed. One or more alarm messages may be generated and sent to a network entity for further decision or action. One or more QoT values (overall QoT or $QoT_H$ and $QoT_V$) may be determined and sent to a network entity. One or more SOP measures $SOP_{Rx}$ at receiver side may be determined and sent to a network entity.

At step 515, the initial SOP settings $SOP_{Tx}$ is set to the SOP settings $SOP_0$ obtained at the end of the training phase (step 510). The SOP settings $SOP_{Tx} = SOP_0$ are sent to the associated optical transmitter for SOP correction at transmitter side.

At step 516, a tracking phase is implemented to adjust the SOP settings using an iterative process. An iteration of the iterative process may include: determining transmitter SOP settings $SOP_{Tx}$ based on one or more QoT measures (overall QoT or $QoT_H$ and $QoT_V$), sending the transmitter SOP settings to the concerned optical transmitter and updating the one or more QoT measures at receiver side. The iterative process is performed in closed loop between the optical receiver and the optical transmitter. During the tracking phase, the SOP value $SOP_{Tx}$ at the output of the optical transmitter is corrected in real time to maintain the QoT in the vicinity of an optimum value $QoT_M$ obtained during the training phase, i.e. the difference between the current QoT and the optimum value $QoT_M$ is maintained below a threshold.

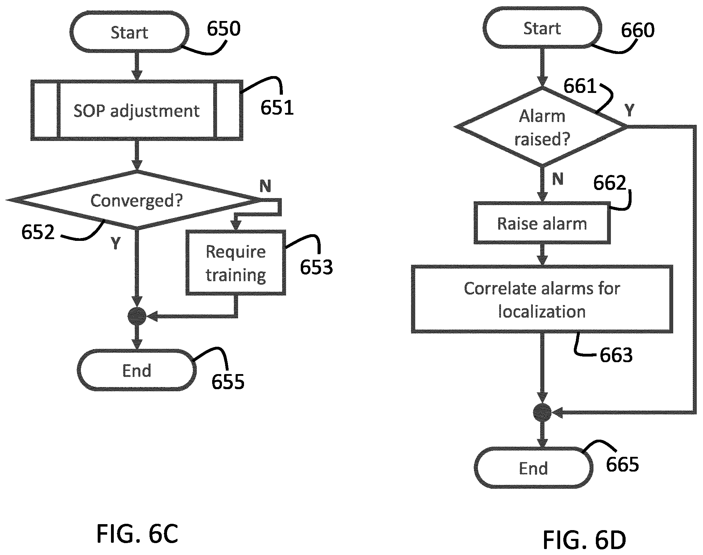

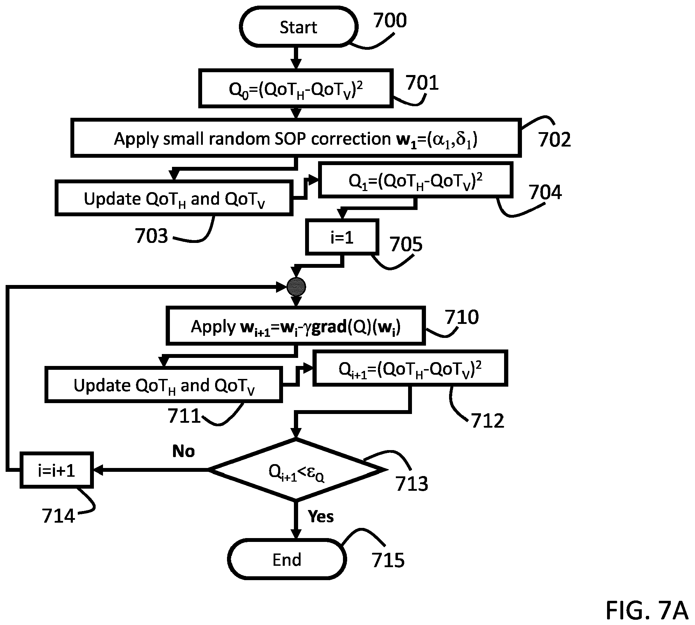

The overall QoT value obtained in response to the correction is determined to check whether further correction is necessary. New SOP settings $SOP_{Tx}$ may be determined until the QoT is in the vicinity of the optimum value $QoT_M$. Example methods for SOP settings $SOP_{Tx}$ determination are described by reference to FIGS. 6C and 7A - 7B.

At step 517, it is determined whether training is required. For example a training may be required if a value QoT in the vicinity of the optimum value $QoT_M$ cannot be obtained or if the QoT at receiver side does not change with the SOP correction sent at step 516 (due for example to a breach in the optical link / fiber). If training is required, then step 510 is executed after step 517. If training is not required, then step 516 is executed again after step 517.

At step 520, a detection of PDL induced QoT variations is performed.

At step 522, if PDL induced QoT variations have been detected at step 520 (result=1), then step 523 is executed after step 522. Otherwise, if no PDL induced QoT variations have been detected at step 520, then step 520 is executed again after step 522.

At step 523, a handling of alarms is performed. One or more alarm messages may be generated and sent to a network entity for further decision or action. One or more QoT values (overall QoT or $QoT_H$ and $QoT_V$) may be determined and sent to a network entity. One or more SOP measures $SOP_{Rx}$ at receiver side may be determined and sent to a network entity.

At step 524, one or more operations may be triggered upon sending an alarm. For example, abnormal PDL may result in the operator choosing to trigger one or more of the below operations:

1) Sending a technician on the field to replace a component (fiber / device) exhibiting abnormally high PDL;
2) Rerouting the communication through an alternative optical path;
3) Decreasing the capacity of the concerned optical path to increase the safety distance from the FEC limit;
4) When the receiver DSP works in a default regime with suboptimal signal quality but with advantages w.r.t. e.g. power consumption, this event could trigger a receiver DSP mode which involves activation of compensating functions, like compensating for the average PDL at the receiver and / or compensating for nonlinear effects;
5) Replacing the receiver with a new one offering the abovementioned capabilities;
6) Changing the power setting of fiber spans (through a centralized entity e.g. the network controller).

At step 525, it is determined whether switch to active mode is required. The determination may be based on any rule, policy or configuration. If switch to active mode is required, then steps 501 and 510 are executed after step 525. If switch to active mode is not required, then step 520 is executed again after step 525.

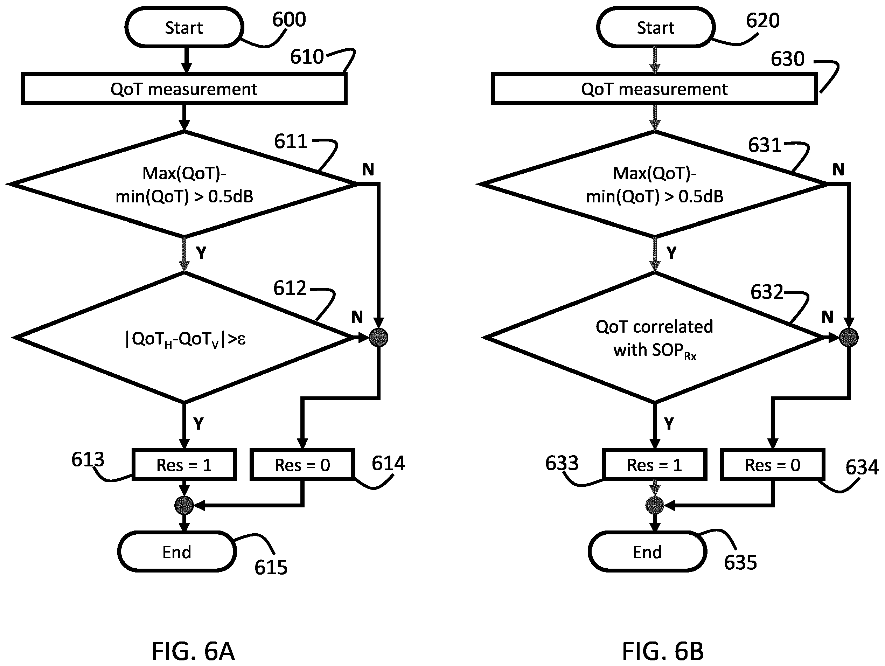

FIG. 6A shows a flowchart of a method for detection of PDL induced QoT variations according to the first detection approach. The steps of the method may be implemented by an optical receiver according to any example described herein. The steps of the method may be implemented during steps 511 or 520 (detection of PDL issue) of the method described by reference to FIG. 5.

At step 600, the method starts.

At step 610, overall QoT values are measured over a measurement period. This measurement period could be e.g. 10 mins and an average QoT value over the measurement period may be used. Other QoT statistic parameter or combinations of statistics may be used.

At step 611, it is determined whether abnormal QoT variations occur over the measurement period. For example it is determined whether the difference between the maximum and the minimum QoT values over the measurement period is over a threshold, e.g. 0.5 dB. If no abnormal QoT variations occurs, the step 614 is executed after step 611, otherwise step 612 is executed after step 611.

At step 612, current QoT values at the optical receiver are determined separately for both polarization tributaries as $QoT_H$ and $QoT_V$ and it is determined whether PDL-induced QoT variations are detected, based on the fact that the current values $QoT_H$ and $QoT_V$ from both tributaries significantly differ, for example when the difference between $QoT_H$ and $QoT_V$ (in absolute value) is greater than a threshold (e.g. 0.5 dB, 1 dB, etc). If PDL-induced QoT variations have been detected at step 612, then step 613 is executed after step 612 (result= 1), otherwise step 614 is executed after step 612 (result= 0).

At step 615, the method ends.

FIG. 6B shows a flowchart of a method for detection of PDL induced QoT variations according to the second detection approach. The steps of the method may be implemented by an optical receiver according to any example described herein. The steps of the method may be implemented during steps 511 or 520 (detection of PDL issue) of the method described by reference to FIG. 5.

At step 620, the method starts.

At step 630, overall QoT are measured over a measurement period. This measurement period could be e.g. 10 mins and an average QoT value over the measurement period may be used. Other QoT statistic parameter or combinations of statistics may be used.

At step 631, it is determined whether abnormal QoT variations occur over the measurement period. For example, it is determined whether the difference between the maximum and the minimum QoT values over a measurement period is over a threshold, e.g. 0.5 dB. If no abnormal QoT variations occurs, the step 634 is executed after step 631, otherwise step 632 is executed after step 631.

At step 632, temporal variations of overall QoT values at the optical receiver are compared to temporal variations of SOP values $SOP_{Rx}$ at receiver side over a monitoring period. The monitoring period may be the same as the measurement period used in step 630. The duration of the monitoring period may be set to a few minutes (e.g. 10 mins) or lower. The duration of the monitoring period may be higher than the intrinsic monitoring hardware capabilities (e.g. around 1 sec). The duration of the monitoring period can be adjusted over time, based on the fluctuations of the SOP to better capture the dynamics of PDL.

The value $SOP_{REF}$ and the corresponding $QoT_M$ determined during the training phase may be used in step 632 to determine if a variation of QoT from $QoT_M$ is correlated with a variation of $SOP_{Rx}$ from $SOP_{REF}$.

The comparison of temporal variations of overall QoT values and temporal variations of SOP values $SOP_{Rx}$ may include a determination that PDL-induced QoT variations occur if the variations of the overall QoT values and the SOP values $SOP_{Rx}$ at receiver side are temporally correlated. For example a correlation factor may be determined and compared to a threshold to detect PDL-induced QoT variations. If PDL-induced QoT variations have been detected at step 632, then step 633 is executed after step 632 (result= 1), otherwise step 634 is executed after step 632 (result= 0).

At step 635, the method ends.

FIG. 6C shows a flowchart of a method for SOP tracking. The steps of the method may be implemented by an optical receiver according to any example described herein. The steps of the method may be implemented during step 516 (tracking phase) of the method described by reference to FIG. 5.

At step 650, the method starts.

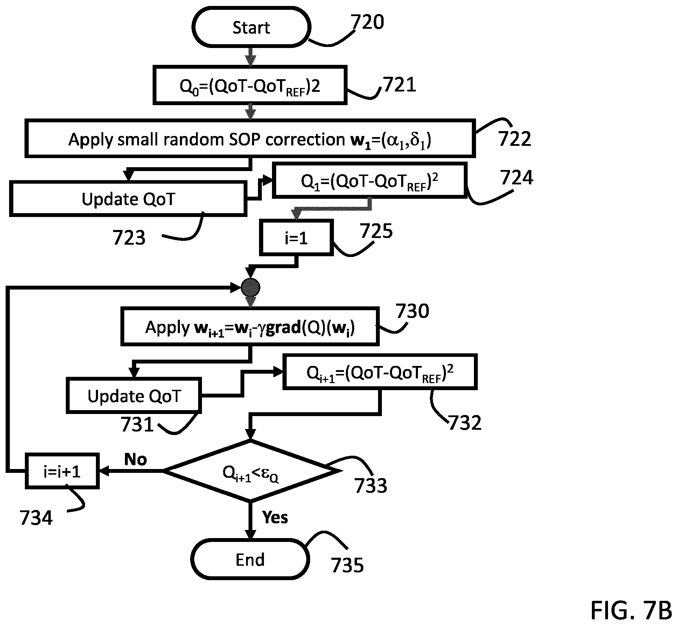

At step 651, a SOP adjustment process is implemented to determine SOP value $SOP_{Tx}$ at the output of the optical transmitter that allows to maintain the QoT in the vicinity of the optimum value $QoT_M$ obtained during the training phase through automation. The SOP adjustment is performed using an iterative process. The iterative process is performed in closed loop between the optical receiver and the optical transmitter. Various SOP adjustment methods may be used. Example SOP adjustment methods are described with respect to FIGS. 7A and 7B.

At step 652, it is determined whether the SOP adjustment process has converged. Various convergence criteria may be used. For example, the number of iterations of the iterative process may be limited to a maximal value and a convergence control parameter Q (e.g. based on QoT values) is compared to a threshold at each iteration: if the convergence control parameter becomes lower than the threshold before the maximum number of iterations is reached, then it is determined that the SOP adjustment process has converged. For example, when SOP values $\alpha$ and $\theta$ which are calculated repeatedly over time do not change much (absolute difference lower than a threshold as usual), current SOP settings may be maintained. When it is determined that the SOP adjustment process has not converged, then step 653 may be executed after step 652 to execute again a training phase (see step 510 of FIG. 5). When it is determined that the SOP adjustment process has converged, then step 655 is executed after step 652 and the method ends with step 652.

FIG. 6D shows a flowchart of a method for alarm handling. The steps of the method may be implemented by an optical receiver or a network entity according to any example described herein. The steps of the method may be implemented during step 514 and 523 (alarm handling) of the method described by reference to FIG. 5.

At step 660, the method starts.

At step 661, it is determined whether at least one alarm message has to be sent. When it is determined that at least one alarm message has to be sent, step 662 is executed after step 661. When it is determined that no alarm message has to be sent, step 665 is executed after step 661.

At step 662, at least one alarm message is sent by the optical receiver to a network entity over a control plane.

At step 663, a network entity may correlate alarms received over a control plane from distinct optical receivers in an optical network to localize in which optical link / fiber / PDL element there may be an issue and decide whether to send control request to one or more optical receivers (e.g. to enter into active mode, to modify measurement threshold for QoT measurement, etc) and / or to inform an operator for on-site action.

At step 665, the method ends.

FIG. 7A shows a flowchart of a method for SOP adjustment. The steps of the method may be implemented by an optical receiver according to any example described herein. The steps of the method may be implemented during step 651 (SOP adjustment process) of the method described by reference to FIG. 6C or during step 516 (tracking phase) of the method described by reference to FIG. 5. This method for SOP adjustment may be used in combination with the first or second detection approach for PDL-induced QoT detection.

At step 700, the method starts.

At step 701, the initial value of a convergence control parameter is determined. The convergence control parameter is determined based on a difference between current QoT measures obtained for the two polarization tributaries of the electrical field. For example, the initial value of the convergence control parameter $Q_0=(QoT_H-QoT_V)^2$ is determined for current $QoT_H$ and $QoT_V$ values.

At step 702, a small random SOP correction $\mathbf{w_1}=(\alpha_1,\delta_1)$ is determined, the SOP settings including this SOP correction are sent to the optical transmitter to be applied by the optical transmitter.

At step 703, the current values of $QoT_H$ and $QoT_V$ are updated after SOP correction of step 702.

At step 704, the convergence control parameter $Q_1=(QoT_H-QoT_V)^2$ is updated using the updated values of $QoT_H$ and $QoT_V$ obtained at step 703.

At step 705, an iteration index is set to an initial value (i=1). An iterative process starts.

At step 710, a gradient descent method is for example applied to determine a new SOP correction $\mathbf{w_{i+1}}=\mathbf{w_i}-\gamma\mathbf{grad}(Q)(\mathbf{w_i})$ where $\mathbf{grad}(Q)$ is the gradient of a scalar function of two variables $\alpha_i$ and $\delta_i$ that may be defined as $Q = Q(\alpha_i, \delta_i)$.

Assuming that each $w_i$ is a column **vector,** i.e. $w_i = [\alpha_i, \delta_i]^T$, then $\mathbf{grad}(Q)(wi) = grad(Q(\alpha_i, \delta_i)) = grad(w_i) = \left[\frac{\partial Q}{\partial \alpha_i}, \frac{\partial Q}{\partial \delta_i}\right]^T$ (which is a column vector). Here $\gamma$ is a positive real coefficient defining the step size of the gradient descent. $M^T$ is the transpose of matrix M. The SOP settings including this update SOP correction are sent to the optical transmitter to be applied by the optical transmitter.

At step 711, the current values of $QoT_H$ and $QoT_V$ are updated after SOP correction of step 710.

At step 712, the convergence control parameter $Q_{i+1}=(QoT_H-QoT_V)^2$ is determined using the updated values of $QoT_H$ and $QoT_V$ obtained at step 710.

At step 713, it is determined whether the convergence control parameter $Q_{i+1}$ is below a convergence threshold $\varepsilon$. When the convergence control parameter $Q_{i+1}$ is below the convergence threshold, step 715 is executed after step 713 and the method ends. Otherwise if the convergence control parameter $Q_{i+1}$ is not below the convergence threshold, step 714 is executed after step 713.

At step 714, the iteration index is updated (i= i+1) and step 710 is executed again after step 714.

At step 715, the method ends.

FIG. 7B shows a flowchart of a method for SOP adjustment. The steps of the method may be implemented by an optical receiver according to any example described herein. The steps of the method may be implemented during step 651 (SOP adjustment process) of the method described by reference to FIG. 6C or during step 516 (tracking phase) of the method described by reference to FIG. 5. This method for SOP adjustment may be used in combination with the first or second detection approach for PDL-induced QoT detection.

At step 720, the method starts.

At step 721, the initial value of a convergence control parameter is calculated. The convergence control parameter is determined based on a difference between a reference QoT measure and a current overall QoT measure. For example the convergence control parameter $Q_0=(QoT-QoT_{REF})^2$ is determined for the current overall QoT value, where $QoT_{REF}$ is a reference value, set for example to the maximal QoT value $QoT_M$ obtained during a previous training phase or $QoT_{REF} = QoT_M - Q_t$ where $Q_t$ is a quality measurement threshold

At step 722, a small random SOP correction $\mathbf{w_1}=(\alpha_1,\delta_1)$ is determined and the SOP settings including this SOP correction are sent to the optical transmitter to be applied by the optical transmitter.

At step 723, the current overall QoT value is updated after SOP correction of step 722.

At step 724, the convergence control parameter $Q_1=(QoT-QoT_{REF})^2$ is updated using the updated overall QoT value obtained at step 723.

At step 725, an iteration index is set to an initial value (i=1). An iterative process starts.

At step 730, a gradient descent method is applied to determine a new SOP correction $\mathbf{w_{i+1}}=\mathbf{w_i}-\gamma\mathbf{grad}(Q)(\mathbf{w_i})$

where **grad**(Q) is the gradient of a scalar function of two variables $\alpha_i$ and $\delta_i$ that may be defined as $Q = Q(\alpha_i, \delta_i)$ defined as. Like for the embodiment of FIG. 7A, assuming that each $w_i$ is a column vector, i.e. $w_i = [\alpha_i, \delta_i]^T$, then

$$\mathbf{grad}(Q)(wi) = grad\big(Q(\alpha_i, \delta_i)\big) = grad(w_i) = \left[\frac{\partial Q}{\partial \alpha_i}, \frac{\partial Q}{\partial \delta_i}\right]^T$$

and $\gamma$ is a positive real coefficient defining the step size of the gradient descent. $M^T$ is the transpose of matrix M. The SOP settings including this update SOP correction are sent to the optical transmitter to be applied by the optical transmitter.

At step 731, the current overall QoT value is updated after SOP correction of step 730.

At step 732, the updated convergence control parameter $Q_{i+1}=(QoT-QoT_{REF})^2$ is determined using the updated overall QoT value obtained at step 730.

At step 733, it is determined whether the convergence control parameter $Q_{i+1}$ is below a convergence threshold $\varepsilon$. When the convergence control parameter $Q_{i+1}$ is below the convergence threshold, step 735 is executed after step 733 and the method ends. Otherwise if when the convergence control parameter $Q_{i+1}$ is not below the convergence threshold, step 734 is executed after step 733.

At step 734, the iteration index is updated (i= i+1) and step 730 is executed again after step 734.

At step 735, the method ends.

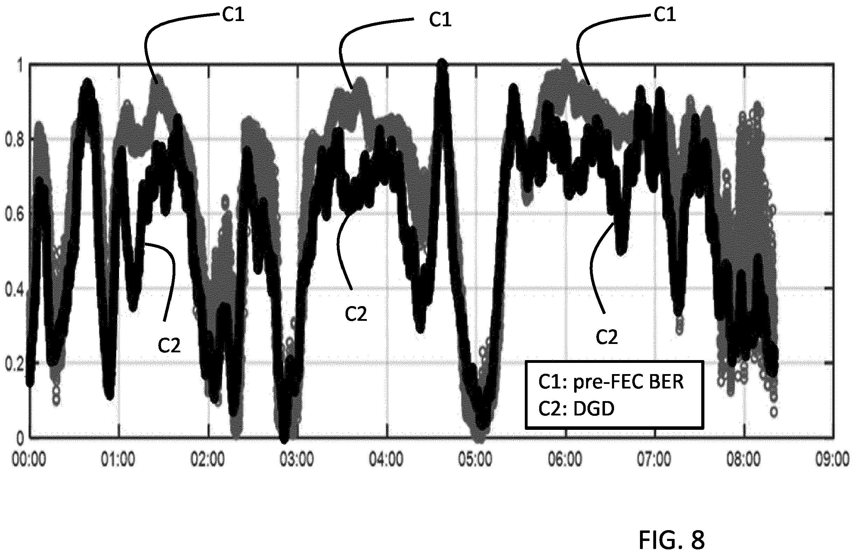

FIG. 8 shows SOP and QoT variations measurements performed over a time period of several hours (e.g. 9 hours). The QoT (C1 curve) is here the overall QoT measured as pre-FEC BER at receiver side. The SOP (C2 curve) is here the SOP variations at receiver side are derived from the monitoring of the differential group delay (DGD). Since the variation of SOP modifies both the DGD distribution (here the moving average) and the QoT, then the moving average of DGD correlates with the QoT. A moving average may be applied to DGD and / or QoT variations to filter noise induced variations. These curves are obtained in case of PDL-induced QoT variations and show that a strong temporal correlation exists in such case between the two curves C1 and C2.

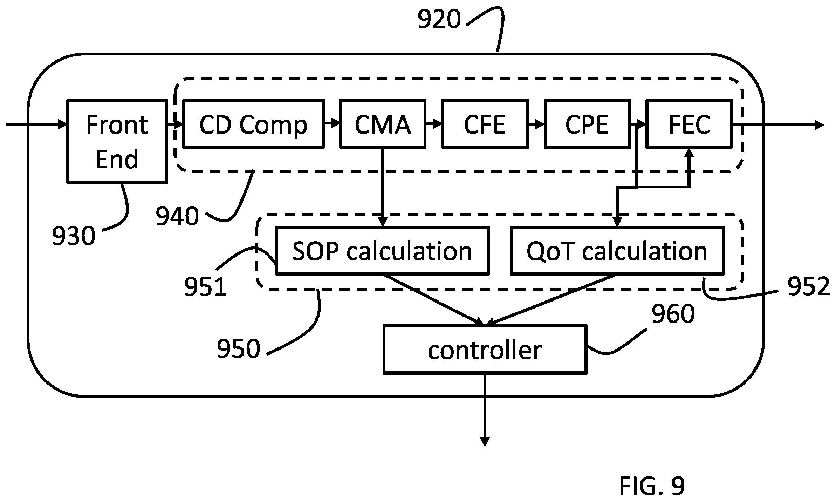

FIG. 9 shows an example embodiment of an optical receiver 920. The optical receiver 920 is configured to communicate with an optical transmitter through an optical path established through one or more optical links / fibers and one or more PDL elements as described herein with reference to various embodiments. The optical receiver 920 may for example include a front end circuitry 930 for coherent detection of an optical signal and conversion to a digital signal. The optical receiver may include a DSP (digital signal processing) circuitry 940 for decoding OTN frame(s) carried by the digital signal and generation of output OTN data. The DSP implements a processing chain including a series of functional components including: a CD (Chromatic Dispersion) Compensation circuitry to compensate for the residual chromatic dispersion, a CMA (Constant Modulus Algorithm) circuitry for polarization demultiplexing, a CFE/CPE (carrier frequency estimation/ carrier phase estimation) circuitry for carrier phase/frequency estimation, a FEC (forward error correction) circuitry for forward error correction. Examples of such components and functions can be found in J. Renaudier. et al, "Linear Fiber Impairments Mitigation of 40-Gbit/s Polarization-Multiplexed QPSK by Digital Processing in a Coherent Receiver," IEEE/OSA Journal of Lightwave Technology, vol. 26, no. 1, pp. 36-42, 2008.

The optical receiver 920 includes one or more calculation circuitry. The optical receiver 920 includes a SOP calculator 951 (e.g. first calculation circuitry 951) configured to determine QoT and / or SOP measurements using the first or second detection approach disclosed herein. The SOP measurement $SOP_{Rx}$ may be obtained at the output of the CMA component by applying an FFT (Fast Fourier Transform) to the filter taps generated by the CMA component to generate SOP measures in Stokes space (s1, s2, s3). The SOP settings in Stokes space (s1, s2, s3) may be converted to SOP settings in Jones space. The adaptive Finite-Impulse-Response (FIR) filter of the CMA is used to compute the SOP. The Jones Matrix of each polarization tributary is obtained by replacing the four FIR filters of the 2x2 CMA equalizer by their DC components (respectively the sum of taps) in the frequency domain (resp. in the time domain). The SOP in the Stokes coordinates can then be derived. Details can be found in document entitled "Proactive Fiber Damage Detection in Real-time Coherent Receiver", by F. Boitier et al., European Conference on Optical Communications, IEEE, 2017.

The optical receiver 920 includes a QoT calculator 952 (e.g. second calculation circuitry 952). The overall QoT measurement or $QoT_H$ and $QoT_V$ measurements may for example be obtained as the pre-FEC BER at the input of the FEC component. For high quality signals, the $QoT_H$ and $QoT_V$ measurements for both tributaries may be obtained by analyzing the H and V constellations right before the FEC circuitry and determining a standard deviation / variance of the received complex samples (an alternative to standard deviation is to calculate the EVM) to provide an estimate of the SNR of the polarization tributaries $E_H$ and $E_V$ respectively. Example method to compute the variance and standard deviation of complex samples is described for example by J. Eriksson, E. Ollila, and V. Koivunen, "Essential Statistics and Tools for Complex Random Variables," IEEE Transactions on Signal Processing, vol. 58, no. 10, pp. 5400-5408, Oct. 2010. For low quality signals, the $QoT_H$ and $QoT_V$ measurements for both tributaries may be obtained by counting the pre-FEC BER errors within FEC, by separately counting errors for each tributary.

The optical receiver 920 includes a SOP controller 960 (e.g. SOP control circuitry 960) configured to detect PDL induced QoT variations, to determine and send control information (SOP settings, alarm message(s), QoT values) measurements based on QoT and / or SOP measurements received from the SOP calculator 950.

**EP 4 020 844 B1**

It should be appreciated by those skilled in the art that any functions, engines, block diagrams, flow diagrams, state transition diagrams and / or flowcharts herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and implemented by a processor of an apparatus or computer, whether or not such processor is explicitly shown.

Specific details are provided in the foregoing description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

Although a flow chart may describe operations as a sequential process, many of the operations may be performed in parallel, concurrently or simultaneously. In addition, the order of the operations may be re-arranged or may sometimes be executed in the reverse order, depending upon the operations involved. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

Each described computation function, block, step can be implemented in hardware, software, firmware, middleware, microcode, or any suitable combination thereof. If implemented in software, the computation functions, blocks of the block diagrams and/or flowchart illustrations can be implemented by computer program instructions / software code, which may be stored or transmitted over a computer-readable medium, or loaded onto a general purpose computer, special purpose computer or other programmable apparatus and / or system to produce a machine, such that the computer program instructions or software code which execute on the computer or other programmable apparatus, create the means for implementing the functions described herein.

When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause an apparatus to perform the necessary tasks. Additionally, the processor, memory and example algorithms, encoded as computer program code, serve as means for providing or causing performance of operations discussed herein.

A device or system or apparatus or component configured to perform one or more functions shall be understood as device or system or apparatus or respectively a component comprising means for performing the one or more functions.

In the present description, blocks denoted as "means configured to perform a function" or "means for performing a function" shall be understood as functional blocks comprising circuitry that is adapted for performing or configured to perform the concerned function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared.

Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used in this application, the term "circuit" or "circuitry" may refer to one or more or all of the following:

(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation."

This definition of "circuit" or "circuitry" applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device. The term circuitry may cover digital signal processor (DSP) hardware, network processor, application specific integrated circuit (ASIC), field programmable gate array (FPGA), etc.

The "circuit" or "circuitry" may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

The "circuit" or "circuitry" may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via a radio network (e.g., after being down-converted by radio transceiver, for example).

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other mediums capable of storing, containing or carrying instruction(s) and/or data.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

List of abbreviations

PDL: polarization dependent loss
SOP: state of polarization

QoT: quality of transmission, e.g. pre-FEC BER, $Q^2_{BER}$ , SNR, ...
OSNR: optical signal to noise ratio
PM: polarization multiplexed
BER: bit error ratio
Rx: receiver
Tx: transmitter
DSP: digital signal processing
FEC: forward error correction
CMA: constant modulus algorithm
CFE: carrier frequency estimation
CPE: carrier phase estimation
CD: chromatic dispersion
DGD: differential group delay

**Claims**

1. An apparatus (420, 920) comprising:

   - means (460, 960) for detecting polarization dependent loss, PDL, induced quality of transmission, QoT, variations, of a polarization multiplexed optical signal, wherein detecting PDL induced QoT variations includes at least one of detecting a difference between QoT measures obtained for two polarization tributaries of electrical field of the polarization multiplexed optical signal and detecting a temporal correlation between QoT variations and state of polarization, SOP, variations of the polarization multiplexed optical signal;
   - means (460, 960) for performing a SOP adjustment during a tracking phase using an iterative process carried out by the means (460, 960) to maintain the QoT in a vicinity of an optimum QoT found during a training phase, wherein an iteration of the iterative process includes determining transmitter SOP settings ($SOP_{Tx}$) based on QoT measures, sending the transmitter SOP settings to an optical transmitter and updating the QoT measures.

2. The apparatus according to claim 1, wherein determining transmitter SOP settings ($SOP_{Tx}$) includes determining initial transmitter SOP settings and determining current transmitter SOP settings from previous transmitter SOP settings and a gradient of a convergence control parameter based on one or more QoT measures.

3. The apparatus according to claim 2, wherein the convergence control parameter is determined as a difference between current QoT measures obtained for the two polarization tributaries of the electrical field.

4. The apparatus according to claim 2, wherein the convergence control parameter is determined as a difference between a reference QoT measure and a current overall QoT measure.

5. The apparatus according to any of claim 1 to 4, comprising means (460, 960) for performing the training phase to determine SOP settings producing the optimum QoT.

6. The apparatus according to claim 5, wherein the SOP settings ($SOP_{Tx}$) producing the optimum QoT are used as the initial transmitter SOP settings for the iterative process.

7. The apparatus according to claim 6 when it depends on claims 2 and 5, wherein the optimum QoT is used as reference QoT measure.

8. The apparatus according to any of the preceding claims, wherein sending the transmitter SOP settings to the optical transmitter is performed through a control layer via a network entity.

9. The apparatus according to any of the preceding claims further comprising means (460, 960) for sending to a network entity an alarm message when PDL induced QoT variations are detected.

10. A method comprising:

    - detecting (511) polarization dependent loss, PDL, induced quality of transmission, QoT, variations, of a polarization multiplexed optical signal, wherein detecting PDL induced QoT variations includes at least one of detecting a difference between QoT measures obtained for two polarization tributaries of electrical field of the polarization multiplexed optical signal and detecting a temporal correlation between QoT variations and state of polarization, SOP, variations; of the polarization multiplexed optical signal
    - performing (516) a SOP adjustment during a tracking phase using an iterative process to maintain the QoT in a vicinity of an optimum QoT found during a training phase, wherein an iteration of the iterative process includes determining transmitter SOP settings ($SOP_{Tx}$) based on QoT measures at receiver side, sending the transmitter SOP settings to an optical transmitter and updating the QoT measures at receiver side.

11. The method according to claim 8, wherein determining transmitter SOP settings ($SOP_{Tx}$) includes determining initial transmitter SOP settings and determining current transmitter SOP settings from previous transmitter SOP settings and a gradient of a convergence control parameter based on one or more QoT measures.

12. The method according to claim 9, wherein the convergence control parameter is determined as a difference between current QoT measures obtained for the two polarization tributaries of the electrical field.

**13.** The method according to claim 9, wherein the convergence control parameter is determined as a difference between a reference QoT measure and a current overall QoT measure.

**14.** The method according to any of claim 8 to 11, comprising performing the training phase to determine SOP settings producing the optimum QoT value.

**15.** The method according to claim 12, wherein the SOP settings ($SOP_{Tx}$) producing an optimum QoT are used as the initial transmitter SOP settings for the iterative process.

**Patentansprüche**

**1.** Vorrichtung (420, 920), die Folgendes umfasst:

- Mittel (460, 960) zum Detektieren von durch polarisationsabhängigen Verlust, PDL, bewirkten Übertragungsqualitäts(QoT)-Schwankungen eines optischen Polarisationsmultiplexsignals, wobei das Detektieren von durch PDL bewirkten QoT-Schwankungen mindestens eines vom Detektieren einer Differenz zwischen QoT-Messungen, für zwei Polarisationszuflüsse eines elektrischen Feldes des optischen Polarisationsmultiplexsignals und vom Detektieren einer zeitlichen Korrelation zwischen QoT-Schwankungen und Polarisationsstatus(SOP)-Schwankungen des optischen Polarisationsmultiplexsignals beinhaltet;
- Mittel (460, 960) zum Durchführen einer SOP-Anpassung während einer Verfolgungsphase unter Verwendung eines iterativen Prozesses, der von den Mitteln (460, 960) umgesetzt wird, um die QoT in einer Nähe einer optimalen QoT aufrechtzuerhalten, die während einer Trainingsphase gefunden wird, wobei eine Iteration des iterativen Prozesses das Bestimmen von Sender-SOP-Einstellungen ($SOP_{Tx}$) auf Basis von QoT-Messungen, das Senden der Sender-SOP-Einstellungen an einen optischen Sender und das Aktualisieren der QoT-Messungen beinhaltet.

**2.** Vorrichtung nach Anspruch 1, wobei das Bestimmen von Sender-SOP-Einstellungen ($SOP_{Tx}$) das Bestimmen von Sender-SOP-Anfangseinstellungen und das Bestimmen von aktuellen Sender-SOP-Einstellungen von vorherigen Sender-SOP-Einstellungen und einem Gradienten eines Konvergenzsteuerparameters auf Basis von einer oder mehreren QoT-Messungen beinhaltet.

**3.** Vorrichtung nach Anspruch 2, wobei der Konvergenzsteuerparameter als eine Differenz zwischen aktuellen QoT-Messungen bestimmt wird, die für die zwei Polarisationszuflüsse des elektrischen Feldes erhalten werden.

**4.** Vorrichtung nach Anspruch 2, wobei der Konvergenzsteuerparameter als eine Differenz zwischen einer QoT-Referenzmessung und einer aktuellen QoT-Gesamtmessung bestimmt wird.

**5.** Vorrichtung nach einem der Ansprüche 1 bis 4, die Mittel (460, 960) zum Durchführen der Trainingsphase umfasst, um SOP-Einstellungen zu bestimmen, die die optimale QoT produzieren.

**6.** Vorrichtung nach Anspruch 5, wobei die SOP-Einstellungen ($SOP_{TX}$), die die optimale QoT produzieren, als die anfänglichen Sender-SOP-Einstellungen für den iterativen Prozess verwendet werden.

**7.** Vorrichtung nach Anspruch 6, wenn er von den Ansprüchen 2 und 5 abhängig ist, wobei die optimale QoT als QoT-Referenzmessung verwendet wird.

**8.** Vorrichtung nach einem der vorhergehenden Ansprüche, wobei das Senden der Sender-SOP-Einstellungen an den optischen Sender via eine Netzwerkentität über eine Steuerschicht durchgeführt wird.

**9.** Vorrichtung nach einem der vorhergehenden Ansprüche, die ferner Mittel (460, 960) zum Senden einer Alarmnachricht an eine Netzwerkentität umfasst, wenn durch PDL bewirkte QoT-Schwankungen detektiert werden.

**10.** Verfahren, das Folgendes umfasst:

- Detektieren (511) von durch polarisationsabhängigen Verlust, PDL, bewirkten Übertragungsqualitäts(QoT)-Schwankungen eines optischen Polarisationsmultiplexsignals, wobei das Detektieren von durch PDL bewirkten QoT-Schwankungen mindestens eines vom Detektieren einer Differenz zwischen QoT-Messungen, für zwei Polarisationszuflüsse eines elektrischen Feldes des optischen Polarisationsmultiplexsignals und vom Detektieren einer zeitlichen Korrelation zwischen QoT-Schwankungen und Polarisationsstatus(SOP)-Schwankungen des optischen Polarisationsmultiplexsignals beinhaltet

- Durchführen (516) einer SOP-Anpassung während einer Verfolgungsphase unter Verwendung eines iterativen Prozesses, um die QoT in einer Nähe einer optimalen QoT aufrechtzuerhalten, die während einer Trainingsphase gefunden wird, wobei eine Iteration des iterativen Prozesses das Bestimmen von Sender-SOP-Einstellungen ($SOP_{Tx}$) auf Basis von QoT-Messungen auf Empfängerseite, das Senden der Sender-SOP-Einstellungen an einen optischen Sender und das Aktualisieren der QoT-Messungen auf Empfängerseite beinhaltet.

11. Verfahren nach Anspruch 8, wobei das Bestimmen von Sender-SOP-Einstellungen ($SOP_{Tx}$) das Bestimmen von Sender-SOP-Anfangseinstellungen und das Bestimmen von aktuellen Sender-SOP-Einstellungen von vorherigen Sender-SOP-Einstellungen und einem Gradienten eines Konvergenzsteuerparameters auf Basis von einer oder mehreren QoT-Messungen beinhaltet.

12. Verfahren nach Anspruch 9, wobei der Konvergenzsteuerparameter als eine Differenz zwischen aktuellen QoT-Messungen bestimmt wird, die für die zwei Polarisationszuflüsse des elektrischen Feldes erhalten werden.

13. Verfahren nach Anspruch 9, wobei der Konvergenzsteuerparameter als eine Differenz zwischen einer QoT-Referenzmessung und einer aktuellen QoT-Gesamtmessung bestimmt wird.

14. Verfahren nach einem der Ansprüche 8 bis 11, das das Durchführen der Trainingsphase umfasst, um SOP-Einstellungen zu bestimmen, die den optimalen QoT-Wert produzieren.

15. Verfahren nach Anspruch 12, wobei die SOP-Einstellungen ($SOP_{Tx}$), die eine optimale QoT produzieren, als die Sender-SOP-Anfangseinstellungen für den iterativen Prozess verwendet werden.

**Revendications**

1. Appareil (420, 920) comprenant :

   - des moyens (460, 960) pour détecter des variations de qualité de transmission, QoT, induites par une perte dépendante de polarisation, PDL, d'un signal optique multiplexé en polarisation, dans lequel la détection de variations QoT induites par une PDL comporte la détection d'une différence entre des mesures de QoT obtenues pour deux affluents de polarisation du champ électrique du signal optique multiplexé en polarisation et/ou la détection d'une corrélation temporelle entre des variations de QoT et des variations d'état de polarisation, SOP, du signal optique multiplexé en polarisation ;
   - des moyens (460, 960) pour effectuer un ajustement de SOP pendant une phase de suivi en utilisant un processus itératif mis en œuvre par les moyens (460, 960) pour maintenir la QoT à proximité d'une QoT optimale trouvée pendant une phase d'entraînement, dans lequel une itération du processus itératif comporte la détermination de réglages de SOP d'émetteur ($SOP_{Tx}$) sur la base de mesures de QoT, l'envoi des réglages de SOP d'émetteur à un émetteur optique et la mise à jour des mesures de QoT.

2. Appareil selon la revendication 1, dans lequel la détermination de réglages de SOP d'émetteur ($SOP_{TX}$) comporte la détermination de réglages de SOP d'émetteur initiaux et la détermination de réglages de SOP d'émetteur actuels à partir de réglages de SOP d'émetteur précédents et d'un gradient d'un paramètre de contrôle de convergence sur la base d'une ou plusieurs mesures de QoT.

3. Appareil selon la revendication 2, dans lequel le paramètre de contrôle de convergence est déterminé comme une différence entre des mesures de QoT actuelles obtenues pour les deux affluents de polarisation du champ électrique.

4. Appareil selon la revendication 2, dans lequel le paramètre de contrôle de convergence est déterminé comme une différence entre une mesure de QoT de référence et une mesure de QoT globale actuelle.

5. Appareil selon l'une des revendications 1 à 4, comprenant des moyens (460, 960) pour effectuer la phase d'entraînement pour déterminer des réglages de SOP produisant la QoT optimale.

6. Appareil selon la revendication 5, dans lequel les réglages de SOP ($SOP_{TX}$) produisant la QoT optimale sont utilisés comme réglages de SOP d'émetteur initiaux pour le processus itératif.

7.  Appareil selon la revendication 6 lorsqu'elle dépend des revendications 2 et 5, dans lequel la QoT optimale est utilisée comme mesure de QoT de référence.

8.  Appareil selon l'une des revendications précédentes, dans lequel l'envoi des réglages de SOP d'émetteur à l'émetteur optique est effectué par une couche de contrôle via une entité de réseau.

9.  Appareil selon l'une des revendications précédentes, comprenant en outre des moyens (460, 960) pour envoyer à une entité de réseau un message d'alarme lorsque des variations QoT induites par une PDL sont détectées.

10.  Procédé comprenant :

    - la détection (511) de variations de qualité de transmission, QoT, induites par une perte dépendante de polarisation, PDL, d'un signal optique multiplexé en polarisation, dans lequel la détection de variations QoT induites par une PDL comporte la détection d'une différence entre des mesures de QoT obtenues pour deux affluents de polarisation du champ électrique du signal optique multiplexé en polarisation et/ou la détection d'une corrélation temporelle entre des variations de QoT et des variations d'état de polarisation, SOP, du signal optique multiplexé en polarisation
    - la réalisation (516) d'un ajustement de SOP pendant une phase de suivi en utilisant un processus itératif pour maintenir la QoT à proximité d'une QoT optimale trouvée pendant une phase d'entraînement, dans lequel une itération du processus itératif comporte la détermination de réglages de SOP d'émetteur ($SOP_{TX}$) sur la base de mesures de QoT côté récepteur, l'envoi des réglages de SOP d'émetteur à un émetteur optique et la mise à jour des mesures de QoT côté récepteur.

11.  Procédé selon la revendication 8, dans lequel la détermination de réglages de SOP d'émetteur ($SOP_{TX}$) comporte la détermination de réglages de SOP d'émetteur initiaux et la détermination de réglages de SOP d'émetteur actuels à partir de réglages de SOP d'émetteur précédents et d'un gradient d'un paramètre de contrôle de convergence sur la base d'une ou plusieurs mesures de QoT.

12.  Procédé selon la revendication 9, dans lequel le paramètre de contrôle de convergence est déterminé comme une différence entre des mesures de QoT actuelles obtenues pour les deux affluents de polarisation du champ électrique.

13.  Procédé selon la revendication 9, dans lequel le paramètre de contrôle de convergence est déterminé comme une différence entre une mesure de QoT de référence et une mesure de QoT globale actuelle.

14.  Procédé selon l'une des revendications 8 à 11, comprenant la réalisation de la phase d'entraînement pour déterminer des réglages de SOP produisant la valeur de QoT optimale.

15.  Procédé selon la revendication 12, dans lequel les réglages de SOP ($SOP_{TX}$) produisant une QoT optimale sont utilisés comme réglages de SOP d'émetteur initiaux pour le processus itératif.

FIG. 1A

FIG. 1B

FIG. 2

| Orientation | Before PDL | After PDL |
|---|---|---|
| $\theta = 0°$ | | |
| $\theta = 45°$ | | |

FIG. 3A

FIG. 3B

FIG. 3C

EP 4 020 844 B1

FIG. 4A

FIG. 4B

FIG. 4C

FIG. 4D

335 Network management

337 Network topology info

336

Query    Answer

Faulty link

Alarm correlation device in centralized control plane

alarms

All Txs in network

All Rxs in network

Traffic

315    325

EP 4 020 844 B1

FIG. 5

**FIG. 6A**

**FIG. 6B**

Start 600

QoT measurement 610

Max(QoT)-min(QoT) > 0.5dB 611    N

Y

$|QoT_H-QoT_V|>\epsilon$ 612    N

Y

Res = 1 613

Res = 0 614

End 615

Start 620

QoT measurement 630

Max(QoT)-min(QoT) > 0.5dB 631    N

Y

QoT correlated with $SOP_{Rx}$ 632    N

Y

Res = 1 633

Res = 0 634

End 635

EP 4 020 844 B1

FIG. 6C

FIG. 6D

EP 4 020 844 B1

EP 4 020 844 B1

Start 700

$Q_0=(QoT_H-QoT_V)^2$ 701

Apply small random SOP correction $\mathbf{w_1}=(\alpha_1,\delta_1)$ 702

Update $QoT_H$ and $QoT_V$ 703

$Q_1=(QoT_H-QoT_V)^2$ 704

$i=1$ 705

Apply $\mathbf{w_{i+1}}=\mathbf{w_i}-\gamma\,\mathbf{grad}(Q)(\mathbf{w_i})$ 710

Update $QoT_H$ and $QoT_V$ 711

$Q_{i+1}=(QoT_H-QoT_V)^2$ 712

$i=i+1$ 714

**No**

$Q_{i+1}<\varepsilon_Q$ 713

**Yes**

End 715

FIG. 7A

EP 4 020 844 B1

Start — 720

$Q_0 = (QoT - QoT_{REF})2$ — 721

Apply small random SOP correction $w_1 = (\alpha_1, \delta_1)$ — 722

Update QoT — 723

$Q_1 = (QoT - QoT_{REF})^2$ — 724

$i = 1$ — 725

Apply $w_{i+1} = w_i - \gamma \mathbf{grad}(Q)(w_i)$ — 730

Update QoT — 731

$Q_{i+1} = (QoT - QoT_{REF})^2$ — 732

$Q_{i+1} < \varepsilon_Q$ — 733

No

$i = i + 1$ — 734

Yes

End — 735

FIG. 7B

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2924890 A1

- US 2014341587 A1

**Non-patent literature cited in the description**

- **J. RENAUDIER. et al.** Linear Fiber Impairments Mitigation of 40-Gbit/s Polarization-Multiplexed QPSK by Digital Processing in a Coherent Receiver. *IEEE/OSA Journal of Lightwave Technology*, 2008, vol. 26 (1), 36-42

- Proactive Fiber Damage Detection in Real-time Coherent Receiver. **F. BOITIER et al.** European Conference on Optical Communications. IEEE, 2017
- **J. ERIKSSON** ; **E. OLLILA** ; **V. KOIVUNEN**. Essential Statistics and Tools for Complex Random Variables. *IEEE Transactions on Signal Processing*, October 2010, vol. 58 (10), 5400-5408